# FASCICULE DE BREVET EUROPEEN

(11) **EP 2 464 505 B1**
(45) Date de publication et mention de la délivrance du brevet: **01.01.2014**
(21) Numéro de dépôt: 10760583.4
(22) Date de dépôt: 28.07.2010
(51) Int. Cl.: B29C 73/10, B29C 73/26, B29C 65/00

(54) **PROCÉDÉ DE RÉPARATION D'UNE PAROI CONSTITUÉE DE PLUSIEURS COUCHES**
VERFAHREN ZUR REPARATUR EINER WAND AUS MEHREREN SCHICHTEN
METHOD FOR REPAIRING A WALL CONSISTING OF A PLURALITY OF LAYERS

(30) Priorité: 12.08.2009 FR 0903941
(43) Date de publication de la demande: 20.06.2012
(73) Titulaire: Jedo Technologies, 31682 Labege (FR); Université Paul Sabatier, 31062 Toulouse Cedex 4 (FR); Société Composite Expertise & Solutions, 31240 Castanet Tolosan (FR)
(72) Inventeur: DELERIS, Michel, F-31320 Rebigue (FR); CENAC, François, F-31000 Toulouse (FR)
(74) Mandataire: Junca, Eric
(86) Numéro de dépôt international: PCT/EP2010/004626
(87) Numéro de publication internationale: WO 2011/018163

(56) Documents cités:
- US-A- 4 916 880
- US-A- 5 207 541
- US-A1- 2008 281 554
- US-B1- 6 174 392

## Description

### Domaine technique de l'invention.

L'invention concerne un procédé de réparation d'une paroi constituée de plusieurs couches, notamment une paroi composite, et présentant une zone endommagée sur plusieurs couches.

### Etat de la technique.

Ces vingt dernières années, l'utilisation de structures constituées de plusieurs couches, et en particulier de structures composites, a augmenté de manière significative.

De telles structures ont un rapport résistance sur poids élevé ce qui rend leurs utilisations particulièrement intéressantes notamment dans les domaines où le poids est un enjeu comme l'aéronautique.

Cette généralisation de l'utilisation de structure multicouche entraîne un besoin croissant de développer des technologies relatives à ce type de structure notamment des techniques d'assemblage ou de réparation.

En ce qui concerne la réparation, il existe plusieurs procédés.

La réparation par « patch » consiste à colmater la zone endommagée de la surface composite et à lier une pièce de remplacement, appelé communément patch, à la surface de la zone colmatée. Cette technique est la plus simple et la plus rapide. Toutefois, la structure réparée est plus épaisse et plus lourde que la structure d'origine. De plus, l'adhésion du patch n'est pas optimale.

La réparation dite « scarf repair » consiste à enlever de la matière autour de la zone endommagée pour créer une zone évidée dans la paroi. Typiquement la matière est enlevée en biseau ou en escalier. Dans une seconde étape, une pièce de remplacement est liée à cette dernière. Généralement, la zone évidée et la pièce de remplacement sont de forme cylindrique.

La structure réparée présente alors la même épaisseur que la structure d'origine. De plus, ce type de réparation présente de meilleur résultat en terme d'adhésion. Toutefois elle est plus complexe à réaliser et plus couteuse du fait du cout des matériaux composites.

Enfin, une paroi ainsi réparée ne présente pas les mêmes caractéristiques mécaniques que la structure d'origine.

Le document US-A1-2008/0281554 présente un procédé de réparation d'une paroi selon le préambule de la revendication 1.

### Objet de l'invention.

L'invention vise à remédier aux inconvénients précédemment évoqués.

L'invention vise en particulier à proposer un procédé de réparation d'une paroi constituée de plusieurs couches permettant de réaliser des économies de matière. L'invention vise également et plus particulièrement à proposer une telle solution qui présente des caractéristiques mécaniques et en particulier une résistance sensiblement identique à celles de la paroi d'origine.

Pour ce faire, l'invention concerne un procédé de réparation d'une paroi constituée de plusieurs couches, notamment une paroi composite, chaque couche comprenant des fibres s'étendant dans une direction principale, et présentant une zone endommagée sur plusieurs couches, ledit procédé de réparation comprenant une étape de retrait de matière consistant à évider la paroi de façon à réaliser une zone évidée englobant la zone endommagée et comportant une zone périphérique constituée de gradins de hauteur égale à l'épaisseur d'au moins une couche et adaptée pour chaque gradin définisse une surface périphérique, dite zone d'interface, coplanaire avec un plan de jonction entre deux couches superposées, dites inférieure et supérieure, s'étendant respectivement en dessous et au dessus du dit plan de jonction, une étape de réalisation d'une pièce de remplacement adaptée pour obturer la zone évidée et comportant, pour chaque palier de la zone évidée, une face complémentaire de recouvrement dudit palier, et une étape d'assemblage de la pièce de remplacement à la paroi,

Les fibres de chaque couche s'étendent totalement ou principalement dans une direction. Par direction principale des fibres, on entend donc soit la direction des fibres si toutes les fibres s'étendent dans une même direction soit la direction des fibres qui est majoritaire.

Les termes dessus, dessous, inférieur, supérieur sont utilisés avec comme référence la face supérieure de la paroi.

Par pièce de remplacement, on entend une pièce constituée d'un tenant ou de l'assemblage de pièces élémentaires.

Selon l'invention, lors de l'étape de retrait, on réalise des gradins définissant chacun une zone d'interface présentant une largeur de dimension supérieure selon la direction principale des fibres de la couche inférieure jouxtant ladite zone d'interface à la dimension de ladite largeur selon des directions autres que la direction principale.

Ce procédé s'appuie sur un procédé classique qui comprend une étape d'usinage préalable de la zone endommagée, la réalisation d'une pièce de remplacement, également appelée patch puis l'assemblage de cette pièce de remplacement à la zone évidée.

La matière est enlevée en escalier ou en gradins.

La zone évidée est conçue de sorte que chaque gradin à sa périphérie soit fonction de la forme de la zone endommagée et de la nature des différentes couches.

La réalisation de la zone évidée est donc plus fine. Ce procédé permet également de réaliser une zone évidée qui peut tenir compte de la présence de singularités au niveau de la paroi. En effet, en présence d'un rivet ou d'un coin, par exemple, on pourra modifier la forme d'un ou de plusieurs gradins.

De plus, réaliser des gradins définissant chacun une zone d'interface présentant une largeur de dimension supérieure selon la direction principale des fibres de la couche inférieure jouxtant ladite zone d'interface à la dimension de ladite largeur selon des directions autres que la direction principale. Permet d'optimiser la matière enlevée et donc de faire des économies de matières tout en gardant les caractéristiques les plus proches de la paroi d'origine.

En effet, les inventeurs ont constaté que le fait d'enlever de la matière modifiait le flux d'efforts et ont cherché à prendre en compte ces modifications locales afin d'améliorer l'efficacité de la reprise des flux d'efforts entre les couches et donc les caractéristiques mécaniques de la paroi une fois réparée.

Ainsi les inventeurs ont découvert que contrairement aux préjugés dans le domaine qui estimaient négligeables les efforts locaux, ces efforts locaux jouaient un rôle fondamental au niveau des caractéristiques mécaniques des parois réparées.

Les inventeurs ont également découvert que la reprise des efforts se situait principalement au niveau des zones d'interface et dans la direction des fibres avec lesquelles la pièce de remplacement est en contact et donc dans la direction des fibres de la couche inférieure qui jouxte lesdites zones d'interface.

Parfois, le flux d'efforts local subissent de légères variations et ne s'orientent pas dans une direction strictement identique à la direction des fibres mais même si de légères variations locales existent les flux d'efforts local s'exercent toujours dans une direction sensiblement identique à la direction des fibres. Par « selon la direction principale des fibres », on entend par conséquent selon une direction sensiblement identique à cette direction une fois prises en compte les légères variations d'efforts locaux.

Réaliser une zone d'interface dont la dimension est supérieure dans la direction des fibres avec lesquelles la pièce de remplacement est en contact permet d'avoir une surface de contact optimale entre la paroi et la pièce de remplacement dans la direction dans laquelle s'exercent les efforts locaux.

La dimension de la largeur de la zone d'interface dans les autres directions étant minimisée mais restant toutefois suffisante pour permettre une bonne adhésion entre la pièce de remplacement et la paroi.

On obtient ainsi un procédé de réparation qui présente une reprise des efforts optimale et qui est plus économique que les procédés classiques en terme de coût matière.

De plus, en minimisant l'enlèvement de matière, on diminue le risque d'altérer l'intégrité de la paroi.

Enfin, moins le volume de matière enlevée est important, plus l'étape de retrait de matière est rapide.

Il est à noter que ce procédé peut être extrapolé à l'assemblage d'une pièce constituée de plusieurs couches avec une seconde pièce de préférence constituée également de plusieurs couches, par exemple un assemblage de deux pièces composites.

En effet, le procédé de réparation n'est autre qu'un assemblage entre une première pièce qui est la paroi et une seconde pièce qui est la pièce de remplacement.

A la différence de la réparation qui est généralement réalisée sur une zone de faible étendue sur laquelle les flux général des forces exercées est sensiblement le même en tout point, l'assemblage peut être réalisé sur une zone relativement étendue sur laquelle le flux général des forces exercées varie. Il convient donc préalablement de discrétiser la zone d'assemblage en plusieurs sous-zones d'étendue inférieure et sur lesquelles le flux général des forces exercées est sensiblement le même en tout point.

Pour chaque sous-zone, on procède ensuite d'une manière similaire au procédé de réparation.

Ainsi le procédé d'assemblage comprend une étape de discrétisation de la zone d'assemblage en sous-zone, pour chaque sous-zone, le procédé d'assemblage comprend une étape réalisation d'une une première zone de jonction sur une première pièce consistant à retirer de la matière ladite première pièce de façon à réaliser une première zone de jonction constituée de gradins, chaque gradin étant d'une hauteur égale à l'épaisseur d'au moins une couche, adaptée pour que chaque gradin définisse une zone d'interface, telle que définie pour la réparation, , une étape de réalisation d'une deuxième pièce adaptée pour être assemblée à la première zone de jonction et comportant, pour chaque zone d'interface de la première zone de jonction une face complémentaire de recouvrement de ladite zone d'interface et une étape de mise en contact des deux pièces et une étape de fixation des deux pièces mises en contact au moyen de la substance adhésive. Comme dans le procédé de réparation, lors de l'étape du procédé d'assemblage consistant à réaliser la première pièce, on réalise des gradins définissant chacun une zone d'interface présentant une largeur de dimension supérieure selon la direction principale des fibres de la couche inférieure jouxtant ladite zone d'interface à la dimension de ladite largeur selon des directions autres que la direction principale.

Avantageusement et selon l'invention, lors de l'étape de retrait de matière, on réalise des gradins définissant chacun une zone d'interface présentant une largeur de dimension comprise entre une valeur maximale sélectionnée pour la direction principale des fibres de la couche inférieure jouxtant ladite zone d'interface et une valeur minimale sélectionnée pour la direction perpendiculaire à la direction principale.

Les inventeurs ont également constaté que le flux d'efforts local était minimal de manière sensiblement perpendiculaire à la direction des fibres avec lesquelles la pièce de remplacement est en contact.

De même qu'on a maximisé la zone d'interface selon la direction dans laquelle s'exercent les efforts, on la minimise dans la direction selon laquelle les efforts sont minimaux. On obtient donc une zone évidée de dimensions optimales et on réalise un gain de matière tout en optimisant la reprise des efforts exercés localement.

Avantageusement et selon l'invention, l'étape de retrait de matière est réalisée séquentiellement de façon à dégager successivement chaque gradin.

Avantageusement et selon l'invention, lors de l'étape de retrait de matière, on réalise des gradins dont la hauteur est égale à l'épaisseur de la couche supérieure de la paroi jouxtant la zone d'interface définie par ledit gradin.

Chaque gradin correspond à une couche de la paroi.

On fournit ainsi une zone d'interface pour chaque couche.

Avantageusement et selon l'invention, lors de l'étape de retrait de matière, on réalise la zone évidée et notamment les gradins en utilisant la technique de découpe par jet d'eau haute pression.

L'usinage d'une telle zone évidée est particulièrement difficile à mettre en oeuvre avec la plupart des techniques d'usinage habituelles.

La technique de l'usinage par jet d'eau semble particulièrement avantageuse pour ce type d'application car elle permet d'effectuer un usinage pas par pas sur des épaisseurs relativement faible. Elle n'impose aucune contrainte mécanique, ni thermique sur la pièce. De plus, elle travaille à profondeur constante et ne nécessite donc pas un parcours d'outil complexe.

Avantageusement et selon l'invention, on réalise une pièce de remplacement constituée de la superposition de couches de remplacement d'épaisseurs adaptées aux hauteurs des gradins.

Afin de s'approcher au mieux de la paroi d'origine, on utilise une pièce de remplacement qui est également constituée de plusieurs couches.

La pièce de remplacement est complémentaire à la zone évidée en hauteur et en largeur.

Cette complémentarité améliore l'assemblage.

De plus, étant donné que la pièce de remplacement et la zone évidée sont complémentaires, minimiser la perte de matière au niveau de la zone évidée revient à minimiser la matière au niveau de la pièce de remplacement et donc à faire également des économies de matière pour la pièce de remplacement. Avantageusement et selon l'invention, on réalise une pièce de remplacement dont chaque couche de remplacement comprend des fibres orientées selon une direction préférentielle prédéterminée, et en ce que l'on oriente les fibres de chacune des couches de remplacement selon la direction principale des fibres de la couche inférieure jouxtant la zone d'interface destinée à être recouverte par ladite couche de remplacement.

Ainsi, au niveau de la zone d'interface, les fibres des couches de la pièce de remplacement sont liées aux fibres de la paroi qui sont dans la même direction. La reprise des efforts est alors optimisée.

Avantageusement et selon l'invention, on dépose les couches de remplacement à l'intérieur de la zone évidée de la paroi et que l'on les assemble entre elles afin de réaliser la pièce de remplacement et à la paroi afin de réaliser l'étape d'assemblage, simultanément.

Avantageusement et selon l'invention, on réalise la pièce de remplacement avant de l'assembler à la paroi.

Avantageusement et selon l'invention, lors de l'étape de retrait de matière, on réalise des gradins adaptés pour définir des zones d'interface comportant un contour externe de forme polygonale.

Les angles au niveau de la zone d'interface permettent de mieux suivre les fibres des couches.

### Description des figures.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une vue en coupe d'une paroi présentant une zone endommagée,
- la figure 2 est une vue en coupe d'une paroi présentant une zone évidée selon l'état de l'art,
- la figure 3 est une vue de dessus d'une paroi présentant une zone évidée selon l'état de l'art,
- la figure 4 est une vue en coupe d'une paroi présentant une zone évidée selon un mode préféré de réalisation de l'invention,
- la figure 5 est une vue de dessus d'une paroi présentant une zone évidée selon un mode préféré de réalisation de l'invention,
- la figure 6 est une vue en coupe de la paroi présentant une zone évidée et une pièce de remplacement selon un mode de réalisation et avant assemblage,
- la figure 7 est une vue en coupe de la paroi présentant une zone évidée une pièce de remplacement selon un mode de réalisation, après assemblage,
- la figure 8 représente un mode de réalisation préféré de la forme de la zone interface de selon l'invention.

### Exposé détaillé d'une forme de réalisation préférentielle de l'invention Description des figures.

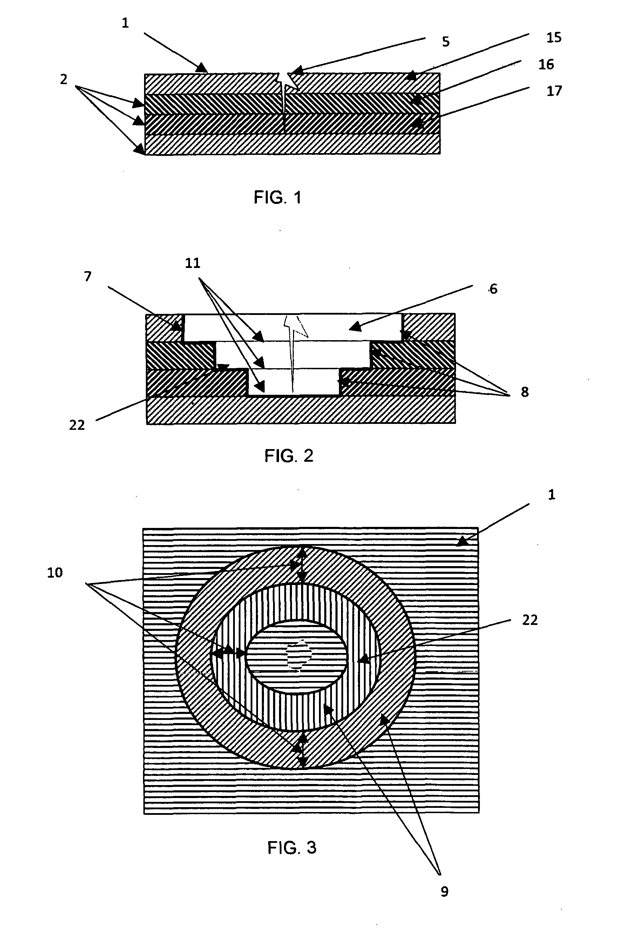

La figure 1 représente une paroi 1 constituée de plusieurs couches 2.

Les couches 2 peuvent être en un matériau similaire ou différent. Elles sont généralement d'une épaisseur de l'ordre de 0,1 à 0,4mm.

Chaque couche de la paroi 1 comprend des fibres 3.

Ces fibres 3 s'étendent totalement ou principalement dans une direction, appelée direction principale 4.

Généralement, la direction principale 4 diffère selon les couches. Ainsi deux couches adjacentes peuvent comprendre des fibres orientées dans des directions principales différentes.

De préférence, la paroi 1 sera en matériau composite c'est à dire un matériau formé de fibres longues telles que des fibres de carbone ou autres, disposées sous la forme de couches superposées et noyées dans une matrice de résine. Comme représenté sur la figure 1, cette paroi 1 présente une zone endommagée 5.

Cette zone endommagée 5 s'étend sur plusieurs couches 2.

Sur la figure 1, est représentée une zone endommagée 5 s'étendant sur trois couches 15,16 et 17.

La première couche 15 est comme indiqué sur la figure 1, la couche à la surface de la paroi 1. La deuxième couche 16 est la couche directement inférieure à la première couche 15. La troisième couche 17 est la couche directement inférieure à la deuxième couche 16.

### Etape de retrait de matière

Pour réparer une telle zone endommagée 5, on réalise en premier lieu une étape de retrait de matière. Au cours de cette étape, on évide la paroi 1 de façon à réaliser une zone évidée 6 englobant la zone endommagée 5.

La zone évidée 6 est de forme générale concave.

Les figures 2 et 3 représentent plusieurs vues d'une zone évidée 6 selon l'état de l'art.

La zone évidée 6 représentée sur la figure 2 comporte une zone périphérique 7, représentée en gras, constituée de gradins 8.

Chaque gradin est d'une hauteur égale à l'épaisseur d'au moins une couche.

Sur les figures 2 et 3, la hauteur d'un gradin est égale à la hauteur d'une couche. Chaque gradin définit une zone d'interface 9 qui est coplanaire avec un plan de jonction de deux couches superposées, dites inférieure et supérieure, s'étendant respectivement en dessous et au dessus du dit plan de jonction.

Ainsi la zone d'interface 22 indiquée sur la figure 2 est à la jonction de la 2^{ème} couche 16 et de la 3^{ème} couche 17. Pour cette zone d'interface 22, la 2^{ème} couche 16 sera la couche supérieure jouxtant la zone d'interface 22 et la 3^{ème} couche 17 sera la couche inférieure jouxtant la zone d'interface 22.

Comme représenté sur les figures 2 et 3, la zone évidée 6 selon l'état de l'art est constituée d'ellipses concentriques formées selon une pente donnée.

Les zones d'interface 9 présente les mêmes largeurs 10 quelque soit le gradin 8 qui les définit.

De plus, pour chaque gradin 8, les zones d'interface 9 présentent les mêmes largeurs 10 selon toutes les directions.

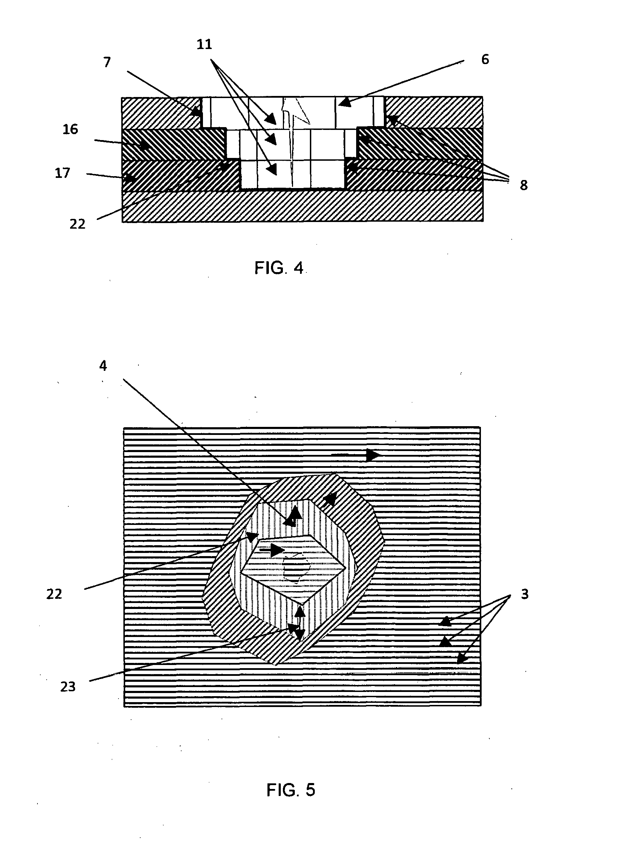

Les figures 4 et 5 représentent plusieurs vues d'une zone évidée 6 selon un mode de réalisation de l'invention.

Lors de l'étape de retrait de matière, on évide la paroi 1 de façon à réaliser une zone évidée 6.

Tout comme dans l'état de l'art, la zone évidée 6 selon l'invention qui comporte une zone périphérique 7 constituée de gradins 8. Chaque gradin définit une zone d'interface 9.

Les gradins 8 réalisés et représentés sur la figure 4 ont une hauteur est égale à l'épaisseur de la couche supérieure jouxtant le zone d'interface 9 définie par ledit gradin c'est à dire que chaque gradin est d'une hauteur égale à l'épaisseur d'une couche.

Toutefois contrairement à l'état de l'art et comme cela apparaît sur la figure 5, les gradins 8 réalisés lors de l'étape de retrait, définissent chacun une zone d'interface 9 présentant une largeur 10 de dimension supérieure selon la direction principale 4 de la couche inférieure jouxtant ladite zone d'interface 9 à la dimension de ladite largeur 10 selon des directions autres que la direction principale 4.

Comme cela apparaît également sur la figure 5, les gradins 8 réalisés lors de l'étape de retrait définissent chacun une zone d'interface 9 présentant une largeur 10 de dimension inférieure selon la direction perpendiculaire à la direction principale 4 de la couche inférieure jouxtant ladite zone d'interface 9 à la dimension de ladite largeur 10 selon des directions autres que la direction perpendiculaire à cette direction principale 4.

En fait, on réalise des gradins 8 définissant chacun une zone d'interface 9 de dimension comprise entre une valeur maximale sélectionnée pour la direction principale 4 de la couche inférieure jouxtant ladite zone d'interface 9 et une valeur minimale sélectionnée pour la direction perpendiculaire à la direction principale 4. Ainsi on réalise une zone d'interface 9 dont la dimension est maximale dans la direction principale 4 avec lesquelles la pièce de remplacement 12 est en contact et minimale dans la direction perpendiculaire. Cette direction principale 4 est celle selon laquelle s'exercent les efforts locaux. Ce procédé permet d'avoir une surface de contact optimale entre la paroi 1 et la pièce de remplacement 12.

On obtient ainsi un procédé de réparation qui présente une reprise des efforts optimale et qui est plus économique que les procédés classiques en terme de coût matière.

Le gain de matière est d'autant plus important que le nombre de couches 2 endommagées est important.

Le gain de matière est évalué en terme de volume de matière économisé mais également en terme de surface. La zone évidée 6 présente une étendue moindre qu'une zone évidée selon les techniques de l'état de l'art, comme cela apparaît en comparant les figures 3 et 5.

Ainsi pour des réparations supérieures à 10 couches 2, on estime le gain de matière en terme de volume entre 40% et 50%. On estime également que pour 10 couches, la surface de la zone évidée 6 sur la 1^{ère} couche est 40 à 60% inférieure à celle d'une zone évidée 6 selon une technique classique.

De plus, en minimisant l'enlèvement de matière, on diminue le risque d'altérer l'intégrité de la paroi 1.

Selon un mode de réalisation préféré de l'invention et comme représenté sur la figure 5 , on réalise des gradins 8 adaptés pour définir des zones d'interface 9 comportant un contour externe de forme polygonale.

Comme cela apparaît sur la figure 5, Les angles au niveau de la zone d'interface 9 permettent de mieux suivre les fibres 3 des couches 2.

L'étape de retrait de matière peut se faire selon des techniques d'usinage ou de retrait de matière connues telles que le fraisage conventionnel, le meulage ou électro-érosion, par jet d'eau haute pression ou par voie chimique.

De préférence, l'étape de retrait de matière est réalisée séquentiellement de façon à dégager successivement chaque gradin.

De préférence, l'étape de retrait de matière est réalisée par usinage à partir de la première couche.

Ce type d'usinage gradin par gradin ou couche par couche et dont la forme change à chaque couche est particulièrement difficile à mettre en oeuvre avec la plupart des techniques d'usinage.

Selon un mode de réalisation préféré de l'invention, on réalise la zone évidée 6 et notamment les gradins 8 en utilisant la technique de découpe par jet d'eau haute pression.

La technique de l'usinage par jet d'eau semble particulièrement avantageuse pour ce type d'application car elle permet d'effectuer un usinage pas par pas sur des épaisseurs relativement faible. Elle n'impose aucune contrainte mécanique ni thermique sur la pièce. De plus, elle travaille à profondeur constante et ne nécessite donc pas un parcours d'outil complexe.

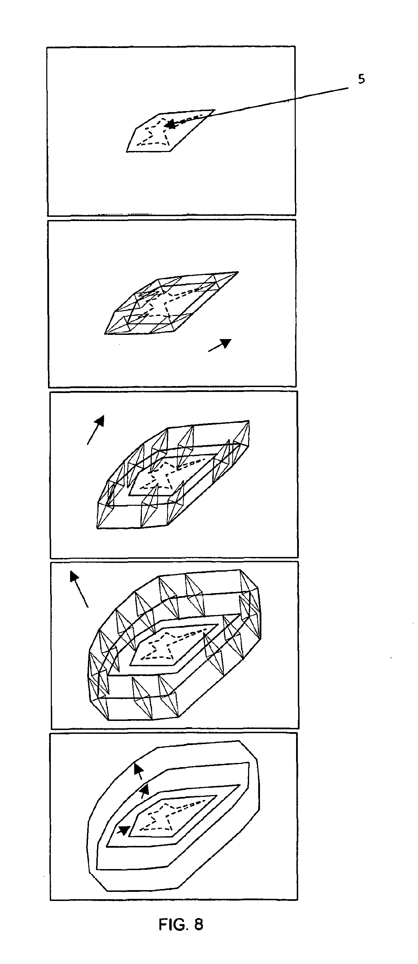

La figure 8 illustre un mode de réalisation pour concevoir une forme optimale pour la zone évidée 6. De préférence, cette conception est automatisée.

Soit une paroi 1 constituée de plusieurs couches 2 et présentant une zone endommagée 5 sur trois couches 15,16 et 17 comme illustré sur la figure 1.

On définit la forme du gradin de la zone évidée 6 au niveau de la 3^{ème} couche, la couche la plus profonde endommagée. Ce 3ème gradin est défini pour englober la zone endommagée 5 au niveau de cette couche tout en définissant une zone d'interface 9 minimale.

On définit la forme du gradin de la zone évidée 6 au niveau de la 2^{ème} couche, le 2^{ème} gradin. Pour ce faire, on modélise des losanges. Selon le mode de réalisation préférentiel représenté sur la figure 8, ce losange a une grande diagonale D égale à 3 fois sa petite diagonale d.

Il est orienté de sorte que sa grande diagonale soit dans la direction principale 4 de la couche inférieure jouxtant la zone d'interface 9 définie par le 2^{ème} gradin soit la 3^{ème} couche.

Pour chaque angle de la forme du 3^{ème} gradin, on positionne ce losange virtuel, on définit une forme qui englobe ces losanges et on obtient la forme du 2^{ème} gradin. De même pour le 1^{er} gradin, on positionne un losange virtuel orientés selon les fibres 3 de la 2^{ème} couche à chaque angle du 2^{ème} gradin, on définit une forme qui englobe ces losanges et on obtient la forme du 1 er gradin.

### Etape de réalisation d'une pièce de remplacement

Le procédé selon l'invention comprend en outre une étape de réalisation d'une pièce de remplacement 12.

La pièce de remplacement 12 est adaptée pour obturer la zone évidée 6 et comporte, pour chaque palier 11 de la zone évidée 6, une face complémentaire de recouvrement dudit palier 11.

La pièce de remplacement 12 peut être constituée d'un tenant ou de l'assemblage de pièces élémentaires.

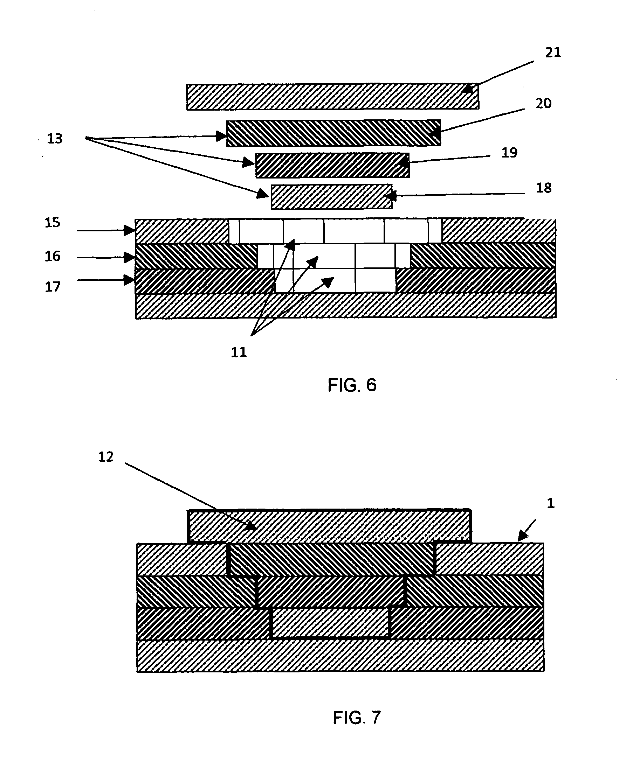

Sur la figure 6 est illustrée une pièce de remplacement 12 constituée de plusieurs tenants.

Selon un mode de réalisation préférentiel de l'invention et comme représenté sur la figure 6, la pièce de remplacement 12 est constituée de la superposition de couches de remplacement 13 d'épaisseurs adaptées aux hauteurs des gradins 8 et de dimensions adaptées pour s'étendre en recouvrement des paliers 11 définies par les gradins 8.

On réalise une pièce de remplacement 12 dont chaque couche de remplacement 13 comprend des fibres orientées selon une direction préférentielle prédéterminée, et en ce que l'on oriente les fibres de chacune des couches de remplacement 13 selon la direction principale 4 des fibres de la couche inférieure de la paroi 1 jouxtant le zone d'interface 9 destinée à être recouverte par la couche de remplacement 13.

Ainsi, au niveau de la zone d'interface 9, les fibres des couches de la pièce de remplacement 12 sont liées aux fibres 3 de la paroi 1 qui sont dans la même direction. La reprise des efforts est alors optimisée.

Comme cela est schématisé sur la figure 6, la 3^{ème} couche de la pièce de replacement a ses fibres orientées selon la direction principale 4 de la 4^{ème} couche de la paroi 1. La 2^{ème} couche de la pièce de replacement a ses fibres orientées selon la direction principale 4 de la 3^{ème} couche de la paroi 1. La 1^{ère} couche de la pièce de replacement a ses fibres orientées selon la direction principale 4 de la 2^{ème} couche de la paroi 1.

On peut éventuellement ajouter une couche supplémentaire qui recouvre la pièce de remplacement 12.

### Etape d'assemblage de la pièce de remplacement à la paroi

Le procédé selon l'invention comprend en outre une étape d'assemblage de la pièce de remplacement 12 à la paroi 1.

Cette étape d'assemblage est illustrée sur les figures 6 et 7.

Selon un mode réalisation préférentiel, on dépose successivement les couches de remplacement 13 à l'intérieur de la zone évidée 6 de la paroi 1. Avant d'être déposées, ces couches 2 ont été imprégnées d'une substance adhésive, par exemple une résine thermoplastique. Une fois les couches de remplacement 13 déposées dans la zone évidée 6, on active la substance adhésive, par exemple par polymérisation dans le cas d'une résine. Ainsi on assemble les différentes couches de remplacement 13 entre elles pour former une pièce de remplacement 12 et en même temps on les assemble à la paroi 1.

Dans un autre mode de réalisation, on peut réaliser la pièce de remplacement 12 dans un premier temps puis l'assembler à la paroi 1.

On peut assembler la pièce de remplacement 12 à la paroi 1 selon toute autre technique connue.

Le procédé de réparation tel que décrit peut être extrapolé à l'assemblage d'une pièce constituée de plusieurs couches avec une deuxième pièce.

Il s'agit alors non pas de l'assemblage d'une paroi constituée de plusieurs couches avec une pièce de remplacement mais de l'assemblage d'une première pièce avec une deuxième pièce, la deuxième pièce étant de préférence également constituée de plusieurs couches.

A la différence de la réparation qui est généralement réalisée sur une zone de faible étendue sur laquelle les flux général des forces exercées est sensiblement le même en tout point, l'assemblage peut être réalisé sur une zone relativement étendue sur laquelle les flux général des forces exercées varie.

Par force, on peut entendre des forces physiques comme la conductivité ou des forces mécaniques comme les efforts ou toute autre force.

Il convient donc préalablement de diviser la zone d'assemblage en plusieurs sous-zones d'étendue inférieure et sur lesquelles le flux général des forces exercées est sensiblement le même en tout point.

Par exemple, si l'on souhaite assembler deux parties d'une aile d'un avion, la direction des forces mécaniques exercées sur l'aile diffèrent en leur extrémité et leur centre. On divisera donc la zone d'assemblage en sous-zones pour lesquelles les forces s'exercent sensiblement dans la même direction. Ces sous-zones peuvent par exemple être d'une largeur de 10 cm.

Pour chaque sous-zone, on procède ensuite d'une manière similaire au procédé de réparation.

On réalise une première zone de jonction en retirant de la matière sur la première pièce de façon à réaliser une première zone de jonction constituée de gradins, chaque gradin étant d'une hauteur égale à l'épaisseur d'au moins une couche, adaptée pour que chaque gradin définisse une zone d'interface comme définie pour la réparation.

Comme dans le procédé de réparation, lors de l'étape du procédé d'assemblage consistant à réaliser la première pièce, on réalise des gradins définissant chacun une zone d'interface présentant une largeur de dimension supérieure selon la direction préférentielle jouxtant ladite zone d'interface à la dimension de ladite largeur selon des directions autres que la direction préférentielle.

Dans le cas où on cherche une reprise des flux d'efforts locaux optimale, la direction préférentielle est la direction principale des fibres de la couche inférieure. La direction préférentielle peut également être une direction prenant en compte les directions de fibres et d'autres paramètres d'efforts locaux.

On réalise une deuxième pièce adaptée pour être assemblée à la première zone de jonction et comportant, pour chaque zone d'interface de la première zone de jonction une face complémentaire de recouvrement de ladite zone d'interface. La zone de jonction de la deuxième pièce peut être réalisée selon le même procédé que la zone de jonction de la première pièce.

Les deux pièces sont ensuite mises en contact et fixées au moyen de la substance adhésive.

L'invention a été décrite ci-dessus en référence à une forme de réalisation donnée à titre de pur exemple. Il va de soi qu'elle n'est pas limitée à cette forme de réalisation mais qu'elle s'étend à toutes les formes de réalisations couvertes par les revendications ci-annexées.

## Revendications

1. Procédé de réparation d'une paroi (1), notamment une paroi composite, constituée de plusieurs couches (2), chaque couche comprenant des fibres (3) s'étendant dans une direction principale (4), et présentant une zone endommagée (5) sur plusieurs couches (2), ledit procédé de réparation comprenant :
- une étape de retrait de matière consistant à évider la paroi (1) de façon à réaliser une zone évidée (6) englobant la zone endommagée (5) et comportant une zone périphérique (7) constituée de gradins (8) de hauteur égale à l'épaisseur d'au moins une couche, et adaptée pour chaque gradin (8) définisse une surface périphérique, dite zone d'interface (9), coplanaire avec un plan de jonction entre deux couches superposées, dites inférieure et supérieure, s'étendant respectivement en dessous et au dessus du dit plan de jonction,
- une étape de réalisation d'une pièce de remplacement (12) adaptée pour obturer la zone évidée (6) et comportant, pour chaque palier (11) de la zone évidée (6) une face complémentaire de recouvrement dudit palier (11),
- et une étape d'assemblage de la pièce de remplacement (12) à la paroi (1),
ledit procédé de réparation étant **caractérisé en ce que**, lors de l'étape de retrait on réalise des gradins (8) définissant chacun une zone d'interface (9) présentant une largeur (10) de dimension supérieure selon la direction principale (4) des fibres (3) de la couche inférieure jouxtant ladite zone d'interface (9) à la dimension de ladite largeur (10) selon des directions autres que la direction principale (4).

2. Procédé de réparation selon la revendication 1 **caractérisé en ce que**, lors de l'étape de retrait de matière, on réalise des gradins (8) définissant chacun une zone d'interface (9) présentant une largeur (10) de dimension comprise entre une valeur maximale sélectionnée pour la direction principale (4) des fibres (3) de la couche inférieure jouxtant ladite zone d'interface (9) et une valeur minimale sélectionnée pour la direction perpendiculaire à la direction principale (4).

3. Procédé de réparation selon l'une des revendications 1 ou 2 **caractérisé en ce que** l'étape de retrait de matière est réalisée séquentiellement de façon à dégager successivement chaque gradin.

4. Procédé de réparation selon l'une des revendications 1 à 3 **caractérisé en ce que**, lors de l'étape de retrait de matière, on réalise des gradins (8) dont la hauteur est égale à l'épaisseur de la couche supérieure de la paroi (1) jouxtant le zone d'interface (9) définie par ledit gradin.

5. Procédé de réparation selon l'une des revendications 3 ou 4 **caractérisé en ce que**, lors de l'étape de retrait de matière, on réalise la zone évidée (6) et notamment les gradins (8) en utilisant la technique de découpe par jet d'eau haute pression.

6. Procédé de réparation selon l'une des revendications 1 à 5 **caractérisé en ce que** l'on réalise une pièce de remplacement (12) constituée de la superposition de couches de remplacement (13) d'épaisseurs adaptées aux hauteurs des gradins (8).

7. Procédé de réparation selon la revendication 6 **caractérisé en ce que** l'on réalise une pièce de remplacement (12) dont chaque couche de remplacement comprend des fibres (3) orientées selon une direction préférentielle prédéterminée, et **en ce que** l'on oriente les fibres (3) de chacune des couches de remplacement selon la direction principale (4) des fibres (3) de la couche inférieure de la paroi (1) jouxtant le zone d'interface (9) destinée à être recouverte par ladite couche de remplacement.

8. Procédé de réparation selon l'une des revendications 6 ou 7 **caractérisé en ce que** l'on dépose les couches de remplacement (13) à l'intérieur de la zone évidée (6) de la paroi (1) et que l'on les assemble entre elles afin de réaliser la pièce de remplacement (12) et à la paroi (1) afin de réaliser l'étape d'assemblage, simultanément.

9. Procédé de réparation selon l'une des revendications précédentes **caractérisé en ce que** l'on réalise la pièce de remplacement (12) avant de l'assembler à la paroi.

10. Procédé de réparation selon l'une des revendications précédentes **caractérisé en ce que**, lors de l'étape de retrait de matière, on réalise des gradins (8) adaptés pour définir des zones d'interface (9) comportant un contour externe de forme polygonale.

## Patentansprüche

1. Verfahren zur Instandsetzung einer Wand (1), insbesondere einer Verbundwand, die aus mehreren Schichten (2) besteht, die jeweils sich in einer Hauptrichtung (4) erstreckende Fasern (3) umfassen, und die einen beschädigten Bereich (5) in mehreren Schichten (2) aufweist, wobei das Instandsetzungsverfahren folgende Schritte umfasst:
- einen Materialentfernungsschritt, der daraus besteht, dass die Wand (1) derartig ausgehöhlt wird, dass ein ausgehöhlter Bereich (6) entsteht, der den beschädigten Bereich (5) einfasst und einen Umfangsbereich (7) umfasst, der aus Stufen (8) besteht, deren Höhe der Dicke von mindestens einer Schicht entspricht, und der derart ist, dass jede Stufe (8) eine Umfangsoberfläche definiert, die Schnittstellenbereich (9) genannt wird und mit einer Angrenzungsebene zwischen zwei übereinanderliegenden Schichten koplanar ist, die untere und obere Schicht genannt werden und sich jeweils unter und über der Angrenzungsebene erstrecken,
- einen Schritt zur Herstellung eines Ersatzstücks (12), das geeignet ist, den ausgehöhlten Bereich (6) zu füllen, und für eden Absatz (11) des ausgehöhlten Bereichs (6) eine den Absatz (11) abdeckende komplementäre Fläche umfasst,
- und einen Schritt zur Montage des Ersatzstücks (12) an der Wand (1),
**dadurch gekennzeichnet, dass** beim Entfernungsschritt Stufen (8) ausgeführt werden, die jeweils einen Schnittstellenbereich (9) mit einer Breite (10) definieren, die in der Hauptrichtung (4) der Fasern (3) der unteren Schicht, die an den Schnittstellenbereich (9) angrenzt, größer ist als die Breite (10) in anderen als der Hauptrichtung (4).

2. Instandsetzungsverfahren nach Anspruch 1, **dadurch gekennzeichnet, dass** beim Materialentfernungsschritt Stufen (8) ausgeführt werden, die jeweils einen Schnittstellenbereich (9) mit einer Breite (10) definieren, die zwischen einem für die Hauptrichtung (4) der Fasern (3) der unteren Schicht, die an den Schnittstellenbereich (9) angrenzt, gewählten Maximalwert und einem für die zur Hauptrichtung (4) senkrecht verlaufende Richtung gewählten Minimalwert liegt.

3. Instandsetzungsverfahren nach Anspruch 1 oder 2, **dadurch gekennzeichnet, dass** der Materialentfernungsschritt sequenziell so ausgeführt wird, dass eine Stufe nach der anderen freigelegt wird.

4. Instandsetzungsverfahren nach einem der Ansprüche 1 bis 3, **dadurch gekennzeichnet, dass** beim Materialentfernungsschritt Stufen (8) ausgeführt werden, deren Höhe der Dicke der oberen Schicht der Wand (1), die an den Schnittstellenbereich (9) angrenzt und durch die Stufe definiert wird, entspricht.

5. Instandsetzungsverfahren nach Anspruch 3 oder 4, **dadurch gekennzeichnet, dass** beim Materialentfernungsschritt der ausgehöhlte Bereich (6) und insbesondere die Stufen (8) unter Einsatz der Hochdruckwasserstrahlschneidtechnik ausgeführt werden.

6. Instandsetzungsverfahren nach einem der Ansprüche 1 bis 5, **dadurch gekennzeichnet, dass** ein Ersatzstück (12) hergestellt wird, das aus übereinanderliegenden Ersatzschichten (13) mit jeweils einer Dicke, die an die jeweilige Höhe der Stufen (8) angepasst ist, besteht.

7. Instandsetzungsverfahren nach Anspruch 6, **dadurch gekennzeichnet, dass** ein Ersatzstück (12) hergestellt wird, bei dem jede Ersatzschicht Fasern (3) umfasst, die in einer vorbestimmten bevorzugten Richtung ausgerichtet sind, und dass die Fasern (3) jeder der Ersatzschichten in der Hauptrichtung (4) der Fasern (3) der unteren Schicht der Wand (1) ausgerichtet werden, die an den Schnittstellenbereich (9) angrenzt und mit der Ersatzschicht abgedeckt werden soll.

8. Instandsetzungsverfahren nach Anspruch 6 oder 7, **dadurch gekennzeichnet, dass** die Ersatzschichten (13) innerhalb des ausgehöhlten Bereichs (6) der Wand (1) abgelegt werden und dass sie gleichzeitig zur Herstellung des Ersatzstücks (12) aneinander und zur Durchführung des Montageschritts an die Wand (1) montiert werden.

9. Instandsetzungsverfahren nach einem der vorhergehenden Ansprüche, **dadurch gekennzeichnet, dass** das Ersatzstück (12) hergestellt wird, bevor es an die Wand montiert wird.

10. Instandsetzungsverfahren nach einem der vorhergehenden Ansprüche, **dadurch gekennzeichnet, dass** beim Materialentfernungsschritt Stufen (8) ausgeführt werden, die zum Definieren von Schnittstellenbereichen (9) geeignet sind, die eine polygonale äußere Kontur umfassen.

## Claims

1. A method of repairing a wall (1), notably a composite wall, consisting of a plurality of layers (2), each layer comprising fibers (3) extending in a main direction (4), and having a damaged area (5) affecting a plurality of layers (2), said repair method comprising:
- a material removal step consisting in hollowing out the wall (1) in such a fashion as to produce a hollowed out area (6) encompassing the damaged area (5) and including a peripheral area (7) consisting of steps (8) the height of which is equal to the thickness of at least one layer and such that each step (8) defines a peripheral area, called an interface area (9), coplanar with a junction plane between two superposed layers, referred to as lower and upper layers, respectively lying below and above said junction plane,
- a step of producing a replacement part (12) adapted to block the hollowed out area (6) and including, for each level (11) of the hollowed out area (6), a complementary face covering said level (11), and
- a step of assembling the replacement part (12) to the wall (1),
said repair method being **characterized in that**, during the removal step, steps (8) are defined each defining an interface area (9) having a width (10) greater in the main direction (4) of the fibers (3) of the lower layer adjoining said interface area (9) than said width (10) in directions other than the main direction (4).

2. The repair method claimed in claim 1, **characterized in that**, during the material removal step, steps (8) are produced each defining an interface area (9) having a width (10) between a selected maximum value for the main direction (4) of the fibers (3) of the lower layer adjoining said interface area (9) and a minimum value selected for the direction perpendicular to the main direction (4).

3. The repair method claimed in either of claims 1 or 2, **characterized in that** the material removal step is carried out sequentially in such a fashion as to expose each step in succession.

4. The repair method claimed in any one of claims 1 to 3, **characterized in that**, during the material removal step, steps (8) are produced the height of which is equal to the thickness of the upper layer of the wall (1) adjoining the interface area (9) defined by said step.

5. The repair method claimed in either of claims 3 or 4, **characterized in that**, during the material removal step, the hollowed out area (6) and notably the steps (8) are produced using the high-pressure water jet cutting technique.

6. The repair method claimed in any one of claims 1 to 5, **characterized in that** a replacement part (12) is produced consisting of superposed replacement layers (13) with thicknesses adapted to the heights of the steps (8).

7. The repair method claimed in claim 6, **characterized in that** a replacement part (12) is produced each replacement layer of which comprises fibers (3) oriented in a predetermined preferred direction and **in that** the fibers (3) of each of the replacement layers are oriented in the main direction (4) of the fibers (3) of the lower layer of the wall (1) adjoining the interface area (9) to be covered by said replacement layer.

8. The repair method claimed in either of claims 6 or 7, **characterized in that** the replacement layers (13) are deposited inside the hollowed out area (6) of the wall (1) and are assembled to each other in order to produce the replacement part (12) and simultaneously to the wall (1) in order to carry out the assembly step.

9. The repair method claimed in any one of the preceding claims, **characterized in that** the replacement part (12) is produced before assembling it to the wall.

10. The repair method claimed in any one of the preceding claims, **characterized in that**, during the material removal step, steps (8) are produced adapted to define interface areas (9) having an external contor of polygonal shape.
